# EUROPEAN PATENT APPLICATION

(11) **EP 3 579 123 A1**
(43) Date of publication of application: **11.12.2019**
(21) Application number: 17894835.2
(22) Date of filing: 19.10.2017
(51) Int. Cl.: G06F 17/30, G06F 3/01, G06F 3/16, G10L 13/00, G10L 15/10, G10L 15/22

(54) **INFORMATION PROCESSING DEVICE, INFORMATION PROCESSING METHOD, AND PROGRAM**

(30) Priority: 31.01.2017 JP 2017015710
(71) Applicant: Sony Corporation, Tokyo 108-0075 (JP)
(72) Inventor: SAITO, Mari, Tokyo 108-0075 (JP); MIYAZAKI, Mitsuhiro, Tokyo 108-0075 (JP); KIRIHARA, Reiko, Tokyo 108-0075 (JP); YAEDA, Juri, Tokyo 108-0075 (JP)
(74) Representative: MFG Patentanwälte Meyer-Wildhagen Meggle-Freund Gerhard PartG mbB
(86) International application number: PCT/JP2017/037875
(87) International publication number: WO 2018/142686

(57) **Abstract**

Provided is an information processing apparatus capable of acquiring user preference information in a more natural conversation according to an utterance content of a user, an information processing method, and a program.

An information processing apparatus includes an evaluation extraction unit that extracts an evaluation by a user for content on the basis of an utterance content of the user related to the content, and a generation unit that generates inquiry sound data for further acquiring preference information of the user for the content on the basis of the extracted evaluation.

## Description

### TECHNICAL FIELD

The present disclosure relates to an information processing apparatus, an information processing method, and a program.

### BACKGROUND ART

In recent years, there has been proposed a technology of a sound agent system that analyzes user's utterance sound and provides information for a user's inquiry. In such a sound agent system, it is possible to acquire preference information of a user, such as user's interests, from a user's inquiry content.

As a technology for acquiring user's preference information for content, for example, Patent Document 1 below discloses a technology for collecting viewer feedback for broadcast and using the feedback for generating a rating for the broadcast.

### CITATION LIST

### PATENT DOCUMENT

Patent Document 1: Japanese Patent Application Laid-Open No. 2010-252361

### SUMMARY OF THE INVENTION

### PROBLEMS TO BE SOLVED BY THE INVENTION

However, the technology disclosed in Patent Document 1 described above may interfere with the user's viewing or feeling after-listening, since a questionnaire is provided to the user immediately after the end of the content viewing.

Therefore, the present disclosure proposes an information processing apparatus capable of acquiring user's preference information in a more natural conversation according to an utterance content of a user, an information processing method, and a program.

### SOLUTIONS TO PROBLEMS

According to the present disclosure, proposed is an information processing apparatus including an evaluation extraction unit that extracts an evaluation by a user for content on the basis of an utterance content of the user related to the content, and a generation unit that generates inquiry sound data for further acquiring preference information of the user for the content on the basis of the extracted evaluation.

According to the present disclosure, proposed is an information processing method including, by a processor, extracting an evaluation by a user for content on the basis of an utterance content of the user related to the content, and generating inquiry sound data for further acquiring preference information of the user for the content on the basis of the extracted evaluation.

According to the present disclosure, proposed is a program for causing a computer to function as an evaluation extraction unit that extracts an evaluation by a user for content on the basis of an utterance content of the user related to the content, and a generation unit that generates inquiry sound data for further acquiring preference information of the user for the content.

### EFFECTS OF THE INVENTION

As described above, according to the present disclosure, it is possible to acquire user preference information in a more natural conversation, according to an utterance content of a user.

Note that the effect described above is not necessarily limitative, and any of the effects shown in this specification or other effects that can be understood from this specification may be exhibited together with the effect described above, or instead of the effect described above.

### BRIEF DESCRIPTION OF DRAWINGS

Fig. 1 is a diagram explaining an overview of an information processing system according to an embodiment of the present disclosure.
Fig. 2 is a block diagram showing an example of a configuration of an agent device according to the present embodiment.
Fig. 3 is a block diagram showing an example of a configuration of a server according to the present embodiment.
Fig. 4 is a flowchart showing response processing of a sound agent according to the present embodiment.
Fig. 5 is a flowchart showing detection processing of content to be evaluated according to the present embodiment.
Fig. 6 is a flowchart showing evaluation extraction processing according to the present embodiment.
Fig. 7 is a flowchart showing agent stance setting processing according to the present embodiment.

### MODE FOR CARRYING OUT THE INVENTION

Preferred embodiments of the present disclosure will be described in detail below with reference to the accompanying drawings. Note that, in the present specification and the drawings, the same reference numerals are given to the constituent elements having substantially the same functional configuration, and redundant explanations are omitted.

Furthermore, the explanation will be made in the following order.
1. Overview of Information Processing System according to Embodiment of Present Disclosure
2. Configuration
   2-1. Configuration of Agent Device 1
   2-2. Configuration of Server 2
3. Operation Processing
   3-1. Response Processing
   3-2. Agent Stance Setting Processing
4. Supplement
5. Conclusion

### << 1. Overview of Information Processing System according to Embodiment of Present Disclosure >>

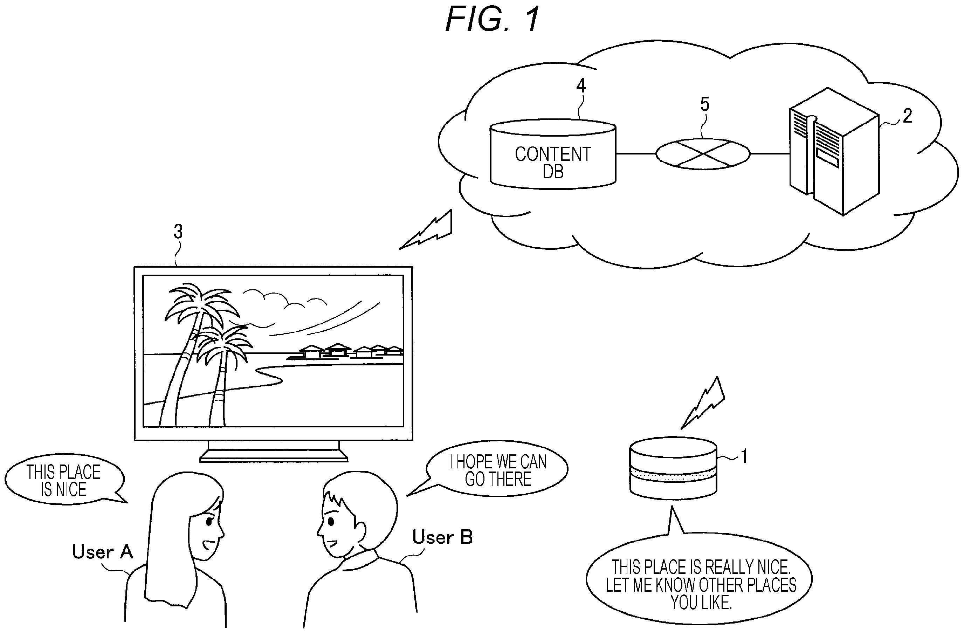

Fig. 1 is a diagram explaining an overview of an information processing system according to an embodiment of the present disclosure. In the information processing system according to the present embodiment, an agent device 1 can acquire preference information of a user through more natural conversation according to an utterance content of a user.

The agent device 1 has a sound output unit (speaker) and a sound input unit (microphone), and has a sound agent function of collecting utterance sound of a user in the periphery and outputting response sound. The information processing system according to the present embodiment may be, for example, a client server type including the agent device 1 and a server 2 as shown in Fig. 1, and analysis of utterance sound and generation of response sound may be performed on the server 2 side. The agent device 1 is communicably connected to the server 2 on the network by wire or wireless, transmits collected utterance sound (raw data, or processing data subjected to predetermined processing such as extraction of a feature amount), or outputs by sound, response sound received from the server 2.

Furthermore, the appearance of the agent device 1 is not limited to the example shown in Fig. 1. In Fig. 1, as an example, the agent device 1 is simply formed in a cylindrical shape, and provided with a light emitting unit (or display unit) such as a light emitting diode (LED) on a side surface.

### (Background)

Here, in a conventional sound agent system, although user's preference information such as interest of a user can be acquired from an inquiry content of the user, larger number of pieces of preference information and decided preference information are difficult to be acquired spontaneously in a natural conversation. In general, it is rare that a user performs utterance related to content alone, and it is natural that a user talks about content while having a dialogue with a plurality of users. Unilaterally inquiry for content by a sound agent to a user immediately after content viewing or the like cannot be said as a natural conversation situation, and may interfere with the feeling after viewing.

Therefore, the information processing system according to the present disclosure naturally participates in conversation while a user (one or plural) is performing conversation related to content, and outputs inquiry sound data for acquiring preference information of the user related to the content.

For example, as shown in Fig. 1, when a user A and a user B who are watching a travel program on a display device 3 are talking about the location featured in the travel program, saying "This place is nice" and "I hope we can go there", the server 2 extracts an evaluation related to an evaluation target (content) on the basis of conversation contents collected by the agent device 1 and metadata of the travel program acquired from a content DB 4.

For example, in a case where the travel program relates to "Phuket", the server 2 extracts a positive evaluation by the user A for Phuket from the utterance sound by the user A, "This place is nice", and further extracts positive evaluation by the user B for Phuket from the utterance sound by the user B that agrees with the user A's "I hope we can go there". Then, the server 2 accumulates these evaluations as preference information, and further outputs inquiry sound for acquiring more detailed preference information related to the content, what feature of Phuket the user like (for example, "Let me know what particular feature you like") from the agent device 1. Since the user is in a conversation about the content, it can be expected that the user naturally responds to the inquiry sound from the agent device 1 as well. Furthermore, the server 2 can also enhance the conversation with the user by adding to the inquiry sound a line that empathizes with the user's evaluation (for example, "This place is really nice").

Note that the response with the user described above is an example, and the server 2 can acquire the preference information more reliably by enhancing a vague conversation of the user.

The information processing system according to an embodiment of the present disclosure has been described above. Subsequently, specific configurations of each device included in the information processing system according to the present embodiment will be described with reference to the drawings.

### << 2. Configuration >>

### <2-1. Configuration of Agent Device 1>

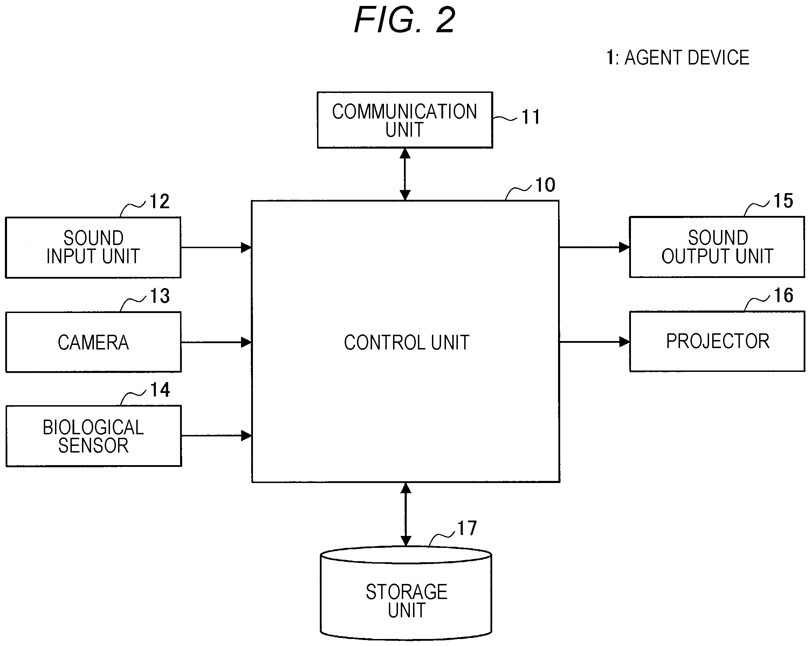

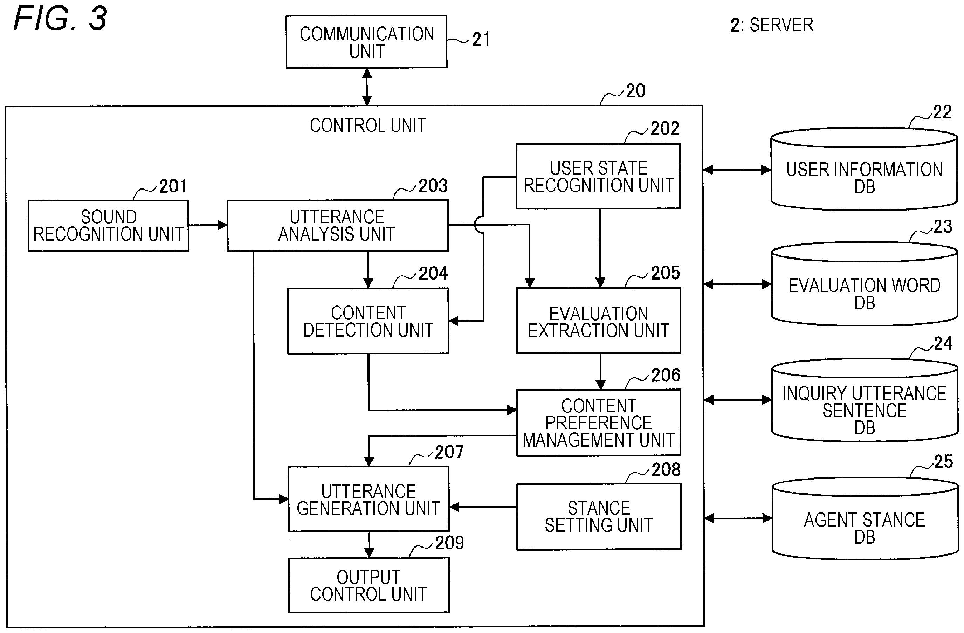

Fig. 2 is a block diagram showing an example of the configuration of the agent device 1 according to the present embodiment. As shown in Fig. 3, the agent device 1 has a control unit 10, a communication unit 11, a sound input unit 12, a camera 13, a biological sensor 14, a sound output unit 15, a projector 16, and a storage unit 17.

The control unit 10 functions as an operation processing device and a control device, and controls the overall operation in the agent device 1 according to various programs. The control unit 10 is realized by, for example, an electronic circuit such as a central processing unit (CPU) or a microprocessor. Furthermore, the control unit 10 may include a read only memory (ROM) that stores a program to be used, an operation parameter, or the like, and a random access memory (RAM) that temporarily stores a parameter that changes appropriately, or the like.

The control unit 10 according to the present embodiment controls the communication unit 11 to transmit information input from the sound input unit 12, the camera 13, and the biological sensor 14 to the server 2 via a network 5. Furthermore, the control unit 10 has an audio agent function of outputting by sound, utterance sound data received from the server 2 from the sound output unit 15. Furthermore, the control unit 10 can project image data received from the server 2 from the projector 16 to present information. Moreover, the control unit 10 can connect to a home network such as home Wi-Fi via the communication unit 11 to display presentation information on a display device in a room according to a request from the user, play music from an audio device or the like, instruct a television recorder to make a recording reservation, or control an air conditioning facility.

The communication unit 11 is connected to the network 5 by wire or wireless, and transmits and receives data to and from the server 2 on the network. The communication unit 11 is communicatively connected to the network 5, for example, by a wired/wireless local area network (LAN), Wi-Fi (registered trademark), a mobile communication network (long term evolution (LTE)), the third generation mobile communication system (3G), or the like. Furthermore, for example, the communication unit 11 can also be connected to a home network by, Wi-Fi or the like, or connected to a peripheral external device by Bluetooth (registered trademark) or the like.

The sound input unit 12 is realized by a microphone, a microphone amplifier unit for amplifying and processing a sound signal acquired by the microphone, and an A/D converter for digital conversion to a sound signal, and outputs the sound signal to the control unit 10. The sound input unit 12 is realized by, for example, an omnidirectional microphone, and collects utterance sound of a user in the periphery.

The camera 13 has a lens system including an imaging lens, a drive system that causes the lens system to operate, a solid-state imaging element array that photoelectrically converts imaging light obtained by the lens system to generate an imaging signal, or the like. The solid-state imaging device array may be realized by, for example, a charge coupled device (CCD) sensor array or a complementary metal oxide semiconductor (CMOS) sensor array. The camera 13 captures, for example, a face image (expression) of the user.

The biological sensor 14 has a function of acquiring biological information of the user by contact or non-contact. The configuration of the biological sensor is not particularly limited. However, examples of a non-contacting biological sensor include a sensor that detects a pulse or a heart rate using a radio wave.

The sound output unit 15 has a speaker for reproducing a sound signal and an amplifier circuit for the speaker. The sound output unit 15 is realized by, for example, an omnidirectional speaker, and outputs sound of the agent.

The projector 16 has a function of projecting an image on a wall or screen.

The storage unit 17 is realized by a read only memory (ROM) that stores a program to be used in the processing of the control unit 10, an operation parameter, or the like, and a random access memory (RAM) that temporarily stores a parameter that changes appropriately, or the like.

The configuration of the agent device 1 according to the present embodiment has been specifically described above. Note that the configuration of the agent device 1 is not limited to the example shown in Fig. 2. For example, the agent device 1 may be configured not to have the camera 13, the biological sensor 14, or the projector 16.

### <2-2. Configuration of Server 2>

Fig. 3 is a block diagram showing an example of a configuration of the server 2 according to the present embodiment. As shown in Fig. 3, the server 2 has a control unit 20, a communication unit 21, a user information database (DB) 22, an evaluation word DB 23, an inquiry utterance sentence DB 24, and an agent stance DB 25.

### (Control Unit 20)

The control unit 20 functions as an operation processing device and a control device, and controls the overall operation in the server 2 according to various programs. The control unit 20 is realized by, for example, an electronic circuit such as a central processing unit (CPU) or a microprocessor. Furthermore, the control unit 20 may include a read only memory (ROM) that stores a program to be used, an operation parameter, or the like, and a random access memory (RAM) that temporarily stores a parameter that changes appropriately, or the like.

Furthermore, the control unit 20 according to the present embodiment also functions as a sound recognition unit 201, a user state recognition unit 202, an utterance analysis unit 203, a content detection unit 204, an evaluation extraction unit 205, a content preference management unit 206, an utterance generation unit 207, a stance setting unit 208, and an output control unit 209.

The sound recognition unit 201 performs recognition processing (conversion into text) of the transmitted utterance sound of the user collected by the agent device 1, and outputs the recognition result (user utterance sound text) to the utterance analysis unit 203.

The user state recognition unit 202 recognizes the user's state (action, movement, sight line, expression, emotion, or the like) on the basis of the user's captured image and biological information acquired by the agent device 1, and outputs the recognition result to the content detection unit 204 and the evaluation extraction unit 205. Note that the captured image of the user may be captured by a camera installed around the user and acquired by the agent device 1 via the home network.

The utterance analysis unit 203 analyzes the user utterance sound text recognized by the sound recognition unit 201. For example, the utterance analysis unit 203 can divide sound text into words by morphological analysis or part-of-speech decomposition, and interpret the meaning of sentences by syntactic analysis, context analysis, semantic analysis, or the like.

The content detection unit 204 has a function of detecting (specifying) an evaluation target (content) in the utterance sound of the user on the basis of the analysis result by the utterance analysis unit 203. For example, in a case where there is a word indicating an evaluation target (for example, a demonstrative pronoun such as "this drama", "this place", "this", "that") in the user's conversation during content viewing, the content detection unit 204 can refer to information of the content being reproduced (video, music, television program, or the like) to specify the content to be evaluated. The information associated with the content being reproduced may be acquired from the agent device 1 or may be acquired from the content DB 4 on the network.

Furthermore, the content detection unit 204 can specify the content to be evaluated from the utterance sound of the user, and also can specify the content to be evaluated in consideration of the user state such as the user's gesture and sight line. For example, in a case where the user is in conversation saying "I like this,", "That is my favorite" or the like with the finger pointing at something, the content detection unit 204 detects an object pointed by the user, an object grasped by the user, or an object to which the sight line of the user is directed, as content to be evaluated on the basis of the analysis result by the utterance analysis unit 203 and the recognition result of the user state recognition unit 202. Furthermore, in a case where a plurality of users is in conversation, an object grasped by either of them or an object to which sight lines of the plurality of users are directed may be detected as the content to be evaluated.

The evaluation extraction unit 205 extracts an evaluation on the basis of the analysis result by the utterance analysis unit 203 or the recognition result of the user state recognition unit 202. Specifically, the evaluation extraction unit 205 extracts predetermined adjectives, adverbs, exclamations and the like from the words analyzed by the utterance analysis unit 203 as evaluation words, and determines the positive evaluation and negative evaluation of the content by the user. The extraction of the evaluation by the evaluation extraction unit 205 is not limited to the positive/negative binary determination, and the degree (in other words, the degree of positiveness or the degree of negativeness) may be determined. Furthermore, the evaluation word may be registered in advance in the evaluation word DB 23, or may be extracted from the user's past wording. Moreover, the evaluation extraction unit 205 can extract an evaluation from the user's facial expression (face image recognition) or emotion (biological information or face image recognition) during conversation. For example, the evaluation extraction unit 205 determines as a negative evaluation in a case where the user frowns while watching the content, and as a positive evaluation in a case where the user is smiling while watching the content.

Furthermore, in a case where another user indicates consent to the evaluation of one user, the evaluation extraction unit 205 may register the preference information by regarding that the another user performs the same evaluation.

### • Dialogue example (in case of agreement)

User A: "Hey, this is" (while pointing at something or pointing at one's eyes. The server 2 identifies content)
User B: "Oh, this if fine" (The server 2 registers a positive evaluation)
User A: "Yeah, right?" (Since the user A agrees, the server 2 registers a positive evaluation)
Agent: "○○ (specified content) is fine, right? "/"oo, Let me know what feature you like?"

### • Dialogue example (in case of disagreement)

User A: "Hey, this is" (while pointing at something or pointing at one's eyes. The server 2 identifies content)
User B: "Oh, this if fine" (The server 2 registers a positive evaluation)
User A: "Well, I do not think so" (Since the user A disagrees, the server 2 registers a negative evaluation)
Agent: "Let me know the reason why you do not like ○○ (specified content), A?" (Inquiry about the reason for the evaluation to the user A)
User A: "because... "(reason)"" (The server 2 registers the evaluation reason of the user A)
Agent: "Let me know what feature of ○○ (specified content) you like, B?" (Inquiry about the reason for the evaluation to the user B)
User B: "because... "(reason)"" (The server 2 registers the evaluation reason of the user B)
Agent: "I see. By the way, how about 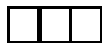 ?" (The server 2 inquires about the evaluation of related content and continues conversation.)

The content preference management unit 206 manages preference information (content preference) for the content of the user stored in the user information DB 22. Specifically, the content preference management unit 206 stores the user evaluation extracted by the evaluation extraction unit 205 on the content (evaluation object) detected by the content detection unit 204, in the user information DB 22.

According to the analysis result by the utterance analysis unit 203, the utterance generation unit 207 generates response utterance sound data of the agent for the utterance of the user. Furthermore, the utterance analysis unit 203 can generate inquiry utterance sound data for further acquiring user preference information related to the content for which the user is in conversation. For example, the utterance analysis unit 203 generates an inquiry utterance for acquiring further preference information on the basis of the user evaluation. Specifically, in a case where the user evaluation is a positive evaluation, the utterance analysis unit 203 shows a positive empathy, and inquires about the reason for the evaluation. Furthermore, in a case where the user evaluation is a negative evaluation, the utterance analysis unit 203 shows a negative empathy, and inquires about the reason for the evaluation. Furthermore, the utterance analysis unit 203 may generate inquiry utterance that fills the missing user preference information (items) related to the content. The missing items may be acquired from the content preference management unit 206. Furthermore, the utterance generation unit 207 may generate inquiry utterance (whether the user really like or dislike the content) that makes evaluation more reliable, in a case where the degree of determination of the evaluation is low (evaluation is ambiguous). For example, in a case where it is difficult to determine the preference only by the following dialogue contents of a plurality of users who are watching a gourmet program, an inquiry for determining the evaluation is performed.

### • Dialogue example (while watching gourmet program);

User A: "Wow, look. This"
User B: "What is it. Wow, it's really sumptuous"
User A: "Isn't it great?"
Agent: "Sushi looks delicious. Do you like sushi?" (in a case where the evaluation target, "Sushi" is acquired from metadata the gourmet program, and the evaluation cannot be decided even though the probability of a positive evaluation is high, an inquiry is performed)
User A: "I like it."
User B: "I do not like it."
Agent: "I see. Let me know why you do not like sushi, B." ("like Sushi" is registered as preference information of the user A, "don't like Sushi" is registered as preference information of the user B, and an inquiry for acquiring preference information is further continued)
User B: "I don't like raw fish. Sushi with cooked ingredient is okay"
Agent: "I see. Let me know what kind of sushi you like, A?" ("don't like raw fish" and "OK with Sushi with cooked ingredient" are newly registered as the preference information of the user B. The inquiry is continued after that)

Furthermore, the utterance generation unit 207 generates inquiry utterance sound data with reference to, for example, an inquiry utterance template registered in the inquiry utterance sentence DB 24, or the like. Alternatively, the utterance generation unit 207 may generate inquiry utterance sound data using a predetermined algorithm.

Furthermore, when generating the inquiry sound data, the utterance generation unit 207 may add a line to empathize with the evaluation of the user to generate utterance sound data. For example, positive empathy may be performed when the evaluation of the user is positive, and negative empathy may be performed when the evaluation of the user is negative. For example, in a case where the user performs a positive evaluation, positive empathy may performed as "it is nice", in a case where the user performs a negative evaluation, negative evaluation may be performed as "it isn't nice". Furthermore, at this time, the empathic line may be defined in advance according to the part of speech of the evaluation word or the type of the word. For example, response may be defined such that, in a case where the user utters "Nice", response is made as "You are right", and in a case where the user utters "Great", response is made as "Really great". Furthermore, the utterance generation unit 207 may inquire about the reason of the user for the positive/negative evaluation. For example, in a case where the user performs a positive/negative evaluation for the content, a response is performed as "Really. Why?" to inquire about the reason. Empathizing the evaluation of the user or performing an inquiry about a reason, can enhance the conversation of the user and can further hear preference information. For example, the utterance generation unit 207 may make a response for asking for an evaluation for the content related to the content being evaluated by the user. For example, in a case where the user performs a positive evaluation of artist X's music, "Yes. The artist Y's ○○ (song name) is also nice, right?", so that the user evaluation for the artist Y can also be acquired.

Furthermore, the utterance generation unit 207 may indicate an empathy or inquires about the evaluation reason in a case where the evaluations of a plurality of users have a dialogue about the content match with each other, and the utterance generation unit 207 may inquire about the reason for the evaluation to any of the users in a case where the evaluations of the plurality of users do not match with each other.

### • Dialogue Example (in a case where evaluations match with each other)

User A: "This is fine," (while looking at the CM for cosmetics)
User B: "I think so too"
Agent: "It's nice"/"oo (cosmetic product name). Let me know what feature you like?"

### • Dialogue Example (in a case where evaluations do not match with each other)

User A: "This is fine," (while looking at the CM for cosmetics)
User B: "Is this so?"
Agent: "○○ (product name of cosmetics). Why you do not like it, B?"

Furthermore, in a case where there is a user who has not performed an evaluation among a plurality of users who are having a dialogue about the content, the utterance generation unit 207 may perform a response for urging the user to utter. For example, the following dialogue example is assumed.

### • Dialogue Example (after watching the travel program)

User A: "Phuket is nice"
   (The server 2 understands from the metadata of the program that the content of the travel program viewed by the user relates to Phuket, and specifies that the content to be evaluated is "Phuket". Furthermore, the user A's positive evaluation for Phuket is registered.
User B: "Yes, I hope we can go there"
   (The server 2 extracts the same positive evaluation as that of the user A for the same target, and registers the evaluation as the preference information of the user B)
   (The server 2 detects the intention of the conversation continuation from sight lines or an interval of the utterance of the user A and the user B, determines it as the timing to be uttered, and generates and outputs inquiry utterance speech data. Specifically, the server 2 shows the empathy since the evaluations of a plurality of users match with each other, and inquires about the reason for the evaluation which is not in the dialogue.)
Agent: "Phuket is attractive. Let me know what feature you like"
User A: "Because it looks like I can relax there"
   (The server 2 registers preference information of the user A (the reason why the user A likes Phuket))
Agent: "B also thinks so?" (The server 2 urges the user B to talk because the user B has not answered)
User B: "I think it's food"
   (The server 2 registers preference information of the user B (the reason why the user B likes Phuket)
   (The server 2 predicts that the conversation will continue because there is an interval, and determines that it is a timing to be uttered)
Agent: "Food is fascinating, isn't it?"
User A: "Are you going to eat now?"
   (The server 2 waits for the next utterance because it is not an utterance about the content)

Furthermore, in a case where an agent stance is set, the utterance generation unit 207 may respond in consideration of the agent stance. Specifically, in a case where the agent stance matches the evaluation of the user, the utterance generation unit 207 may show empathy, and in a case where the agent stance is different from the evaluation of the user, the utterance generation unit 207 may ask the reason for the evaluation. As a result, it is possible to avoid contradicting by showing empathy to each of the users who are performing different evaluations.

Furthermore, the utterance generation unit 207 may generate a question having different granularity (category or classification) in order to acquire further preference information. For example, in addition to the inquiry about the content itself described above, an inquiry about the category itself of the content, and an inquiry about metadata of the content (in particular, information not registered in the user information DB 22) may be generated. For example, in a case where the content is a drama, the utterance generation unit 207 may inquire about, in addition to the reason for the evaluation of the drama, the preference of genre of the drama as, for example, "Do you like criminal drama?", "Do you like medical drama?", or the like. Furthermore, the utterance generation unit 207 may inquire about metadata of the drama, that is, preference of characters, background music, background, original author, or the like, for example, as "Do you like the actor of the leading role?", "Do you like the theme song?", "Do you like the age setting?", "Do you like the original author?", or the like.

Furthermore, the utterance generation unit 207 may set the upper limit of the number of inquiries in order to avoid asking questions in a persistent manner. Furthermore, the utterance generation unit 207 may determine whether or not the inquiry is continued on the basis of the reaction of the user when asking the inquiry (look aside, silence, have a disgusting face, or the like).

Furthermore, the utterance generation unit 207 may generate an inquiry for acquiring the reaction of the user in a multimodal expression. Specifically, for example, the utterance generation unit 207 may refer to the set agent stance, and speaks the agent's opinion to urge the conversation, or may present an opinion of others who are not participating in the dialogue (the past speech of the other family members, other person's comment on the Internet, or the like) to urge the conversation (for example, "C said "......." but how about you, A?", or the like).

Furthermore, in a case where the user shows a negative evaluation, the utterance generation unit 207 may not only ask for the reason for the evaluation but may also clearly indicate another content and ask for the evaluation. The following is a dialogue example.

### • Dialogue example (while watching a program featuring resort)

User A: "I don't really like beach resorts"
   (The server registers a negative evaluation of the user A for the beach resort as preference information of the user A, and performs inquiry about the reason for the evaluation and inquiry for acquiring a reaction for another content.
Agent: "Is that so. Why. Are you interested in World Heritage?"

The stance setting unit 208 has a function of setting a stance of the agent. The agent stance is preference information of the agent, and whether it is a stance in which a positive evaluation is performed for content, or it is a stance in which a negative evaluation is performed may be set (character setting of the agent). The information of the set agent stance is stored in the agent stance DB 25. Furthermore, the stance setting unit 208 may cause the dialogue with the user to affect the agent stance to gradually change the agent stance. For example, in a case where it is a stance in which content is not a preference, the stance setting unit may ask the user who performs a positive evaluation a reason, change the stance while continuing the conversation with the user, and response as "I see. Now I like it a little."

The output control unit 209 has a function of controlling the utterance sound data generated by the utterance generation unit 207 to be output by sound from the agent device 1. Specifically, the output control unit 209 may transmit the utterance sound data from the communication unit 21 to the agent device 1 and instruct the agent device 1 to output sound. Furthermore, the output control unit 209 can also control the agent device 1 to output sound at a predetermined timing. For example, the output control unit 209 may not perform inquiry in a case where conversations of a plurality of users are excited (in a case where the laughter is not interrupted, the volume of voice is large, during conversation, an interval of the conversation is short, the conversation tempo is fast, or the like), and the output control unit 209 may perform inquiry when the conversation settles down (for example, in a case where the interval of the conversation becomes a predetermined length, or the like). Furthermore, in a case where the conversation is not excited, the tempo of the conversation is poor, and the conversation tends to be interrupted, the output control unit 209 may not perform inquiry and output an inquiry next time when the timing is good. When the inquiry is performed later, for example, the output control unit 209 may perform inquiry at a timing at which the user does not forget a content experience, such as within one day from the content experience, or may inquiry as "Let me know what feature you like about ooo (content) you talked about before?", "Let me know the reason you do not like ○○○ you watched the other day", or the like, in a case where the user is relaxed or not busy. Furthermore, when the user inquires about a schedule, news, or the like, the output control unit 209 may perform inquiry together with response. For example, in response to a schedule request from the user ("What is the schedule for today?"), the output control unit 209 may response as "The schedule for today is ○○ from ○ o'clock. Speaking of which, the 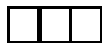 you talk about the other day is really good. ", and acquire more reliable preference information for the content whose evaluation is ambiguous.

### (Communication Unit 21)

The communication unit 21 is connected to the network 5 by wire or wireless, and transmits and receives data to and from the agent device 1 via the network 5. The communication unit 21 is communicatively connected to the network 5, for example, by a wired/wireless local area network (LAN), wireless fidelity (Wi-Fi, registered trademark), or the like.

The configuration of the server 2 according to the present embodiment has been specifically described above. Note that the configuration of the server 2 according to the present embodiment is not limited to the example shown in Fig. 3. For example, part of the configuration of the server 2 may be provided in an external device. Furthermore, the agent device 1 may have part or all of the functional configuration of the control unit 20 of the server 2.

### << 3. Operation Processing >>

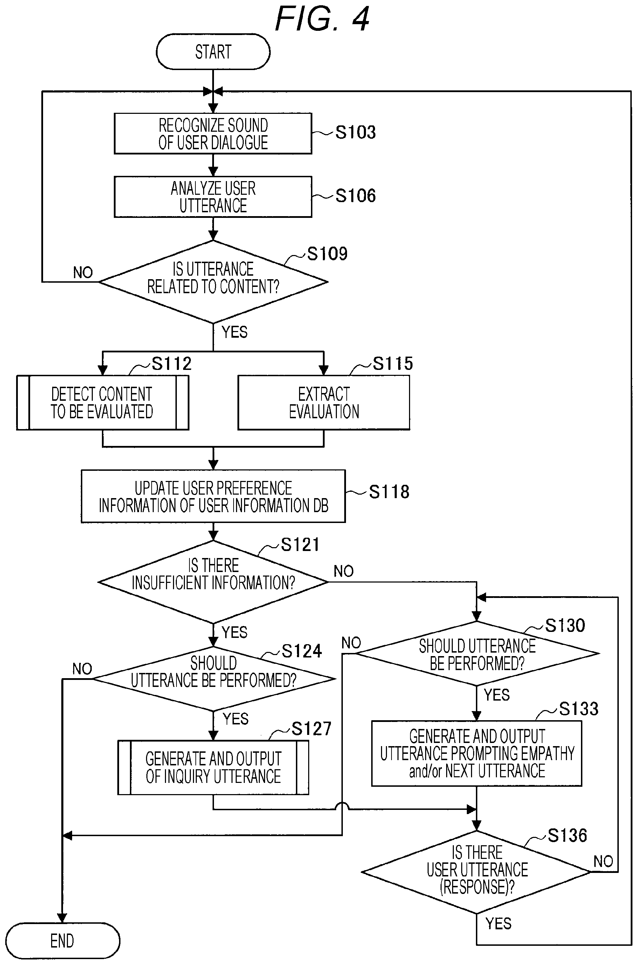

Subsequently, operation processing of the information processing system according to the present embodiment will be specifically described with reference to Figs. 4 to 7.

### <3-1. Response Processing>

Fig. 4 is a flowchart showing response processing of the sound agent according to the present embodiment. As shown in Fig. 4, first, the server 2 causes the sound recognition unit 201 to perform sound recognition of the user dialogue sound collected by the agent device 1 (step S104), and causes the utterance analysis unit 203 to perform utterance analysis (step S106).

Next, the control unit 20 of the server 2 determines whether or not the dialogue content of the user is an utterance related to content (some evaluation target) (step S109).

Next, in a case where it is an utterance related to the content (step S109/Yes), the control unit 20 of the server 2 causes the content detection unit 204 to detect (specify) the content to be evaluated on the basis of the utterance content, the gesture of the user, the sight line, or the like (step S112).

Furthermore, the control unit 20 causes the evaluation extraction unit 205 to extract positive/negative evaluation (or evaluation reason or the like) on the content from the utterance content, the expression, or the like as preference information (step S115). Evaluation words indicating positiveness/negativeness are registered in the evaluation word DB 23 in advance, and the evaluation extraction unit 205 may refer to the evaluation word DB 23 and analyze the evaluation words included in the user utterance to extract the evaluations, or may use an algorithm for recognition each time. Furthermore, in addition to the analysis of the user utterance, the evaluation extraction unit 205 can extract a positive/negative evaluation of the user for the content by referring to the user's expression or emotion (that can be acquired from expression or biological information).

Next, the content preference management unit 206 updates the user preference information (in other words, the information of the user preference regarding the content) stored in the user information DB 22 (step S118).

Next, the content preference management unit 206 determines whether or not there is insufficient information (data item) in the user preference information (step S121).

Next, in a case where there is insufficient information (step S121/Yes), the control unit 20 of the server 2 generates an inquiry utterance by the utterance generation unit 207 if it is in a situation to be uttered (step S124/Yes), and causes the output control unit 209 to perform control such that the inquiry utterance is output from the agent device 1 (step S127). Whether or not it is a situation to be uttered is determined on the basis of, for example, the state of the user (sight line or action), the interval of the utterance, the degree of excitement, or the like. Furthermore, here, although the inquiry utterance for acquiring insufficient information (item) among the preference information of the user registered into user information DB 22 is generated as an example, the present disclosure is not limited to this. For example, the utterance generation unit 207 may generate the inquiry utterance for determining the content or the evaluation (for example, "Is it a ○○ (content)?", "Do you like ○○ (content)?", or the like) in a case where the content cannot be detected in step S112 (for example, cannot be identified due to an ambiguous expression), or in a case where the evaluation cannot be extracted in step S115 (for example, cannot be decided due to an ambiguous expression.

On the other hand, in a case where there is no insufficient preference information for the content (step S121/No), if it is a situation to be uttered (step S130), the server 2 generates a response showing empathy and/or an utterance that urges the next utterance, and outputs the response and/or the utterance (step S133). The next utterance is, for example, an inquiry utterance for asking preference information for another content related to the content to be evaluated (for example, "You like ○○ (content). How about 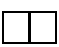 (related another content)?", or the like).

Note that, in steps S124 to S133 described above, the inquiry utterance is generated after whether or not it is a situation to be uttered is determined. However, the present embodiment is not limited to this, and first, the utterance generation unit 207 may generate an inquiry utterance, and the output control unit 209 may perform output control after waiting for a situation to be uttered (the upper limit of the waiting time may be set).

Then, when a new utterance is issued from the user (step S136/Yes), the processes from step S103 are repeated.

Furthermore, in a case where it is not a situation to be uttered (step S124/No, step S130/No), the response processing is ended (waiting for a new utterance).

### (Detection Processing of Content to be Evaluated)

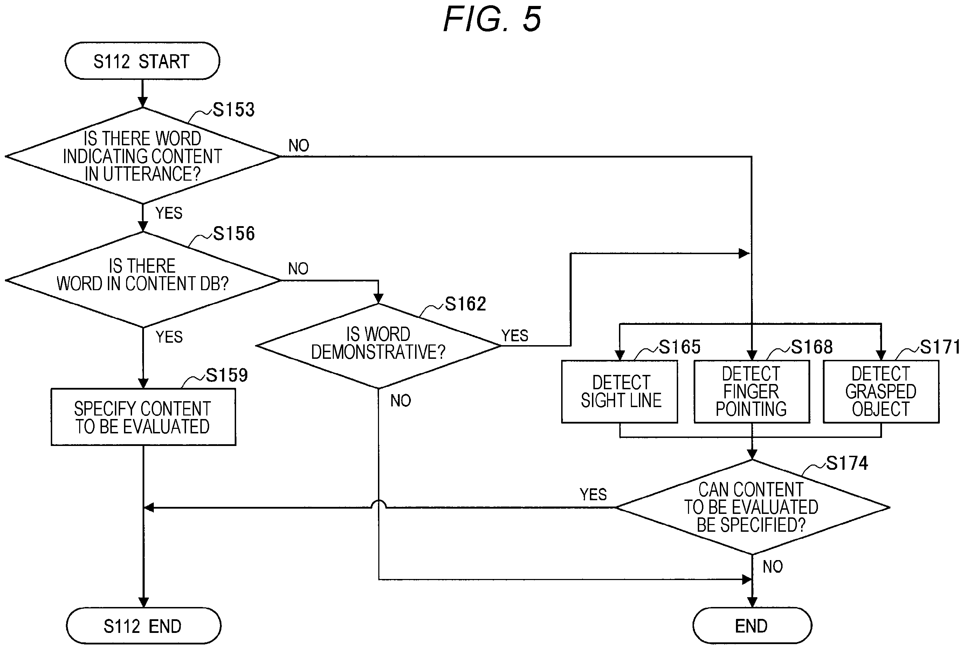

Next, the detection processing of the content to be evaluated shown in step S112 will be described in detail with reference to Fig. 5. Fig. 5 is a flowchart showing detection processing of content to be evaluated according to the present embodiment.

As shown in Fig. 5, first, the content detection unit 204 of the server 2 determines whether or not there is a word indicating content in the analyzed user utterance (step S153).

Next, in a case where there is a word indicating the content (step S153/Yes), the content detection unit 204 determines whether or not the word is in the content DB 4 (step S156). The content DB 4 may be a program information database provided in an external server, or may be a content dictionary database (a database in which names of contents are registered in advance. not shown) that the server 2 has.

Next, in a case where the word is in the content DB 4 (step S156/Yes), the content detection unit 204 specifies the content to be evaluated (step S159). Note that the content detection unit 204 may acquire information of the specified content from the content DB 4 as necessary.

On the other hand, in a case where there is no word indicating the content in the utterance (step S153/No), or in a case where the word indicating the content is the demonstrative word (step S162/Yes), the content detection unit 204 detects the sight line of the user (step S165), detects finger pointing (step S168), or detects an object to be grasped (step S171) on the basis of the recognition result of the user state, and specifies the content to be evaluated indicated by the user (step S174).

Then, in a case where the content to be evaluated can be specified (step S174/Yes), the content detection processing is ended.

Note that, in a case where the content to be evaluated cannot be specified (step S174/No), the response processing is ended. Alternatively, as described above, an inquiry for specifying the content to be evaluated may be generated.

### (Generation of Inquiry Utterance)

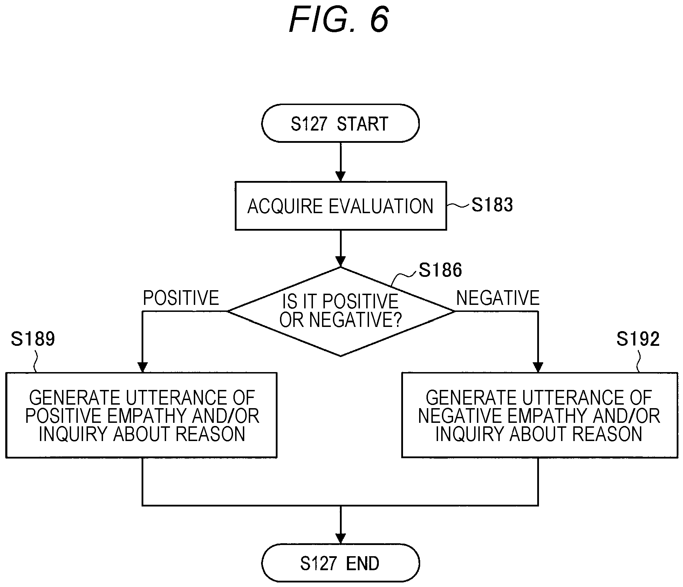

Next, generation processing of the inquiry utterance shown in step S127 will be described in detail with reference to Fig. 6. Fig. 6 is a flowchart showing evaluation extraction processing according to the present embodiment.

As shown in Fig. 6, first, the utterance generation unit 207 acquires the positive/negative evaluation extracted by the evaluation extraction unit 205 (step S183).

Next, in a case where the user evaluation is a positive evaluation (step S186/positive), the utterance generation unit 207 generates an utterance of positive empathy and/or inquiry about a reason (for example, "Nice", "Beautiful. Let me know other places you like.", or the like) (step S189).

On the other hand, in a case of negative evaluation (step S186/negative), the utterance generation unit 207 generates an utterance of negative empathy and/or inquiry about a reason (for example, "It is band", "It is not interesting. Let me know what feature you are not interested in", or the like) (step S192).

### <3-2. Agent Stance Setting Processing>

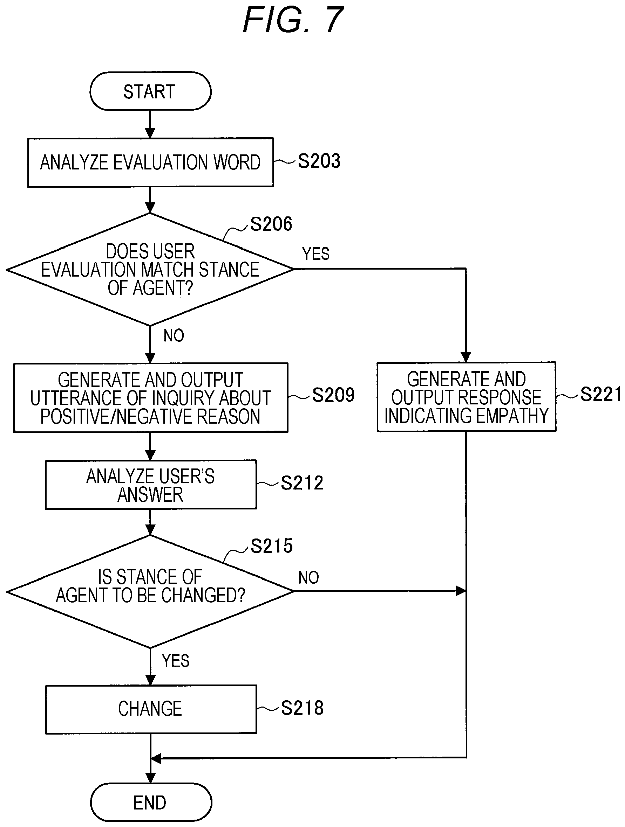

Subsequently, agent stance setting processing according to the present embodiment will be described with reference to Fig. 7. As described above, the server 2 according to the present embodiment can set the agent stance by the stance setting unit 208 and can generate the inquiry utterance referring to the agent stance.

Fig. 7 is a flowchart showing the agent stance setting processing according to the present embodiment. As shown in Fig. 7, first, the control unit 20 of the server 2 analyzes the evaluation word by the evaluation extraction unit 205 (evaluation extraction) (step S203), and determines whether or not the user evaluation matches the agent's stance (step S206).

Next, in a case where the user evaluation does not match the agent's stance (step S206/No), the control unit 20 performs control such that the utterance generation unit 207 generates an utterance for inquiry about the reason for the positive evaluation/negative evaluation, and the output control unit 209 causes the agent device 1 to output by sound, the utterance (step S209).

Next, the control unit 20 causes the utterance analysis unit 203 to analyze the user's response (step S212), and causes the stance setting unit 208 to determine whether or not the agent's stance is changed (step S215). The condition for changing the stance is not particularly limited, but can be determined, for example, according to a preset rule. Specifically, the agent stance may be changed, for example, in a case where the user's evaluation reason is specific or in a case where a large number of evaluation reasons are listed. Furthermore, in a case where the content is music, the agent stance may be changed in a case where the user listens to the music many times.

Next, in a case where the agent stance is changed (step S215/Yes), the stance setting unit 208 changes the agent stance (updates the agent stance DB 25). Furthermore, the control unit 20 may generate a response to inform the user of the change (for example, "It is a good song. It has become my favorite while listening to it many times" (a change from a negative stance to a positive stance), "I see. I may also hate it" (a change from a positive stance to a negative stance), or the like), and output the response.

On the other hand, in a case where the user evaluation matches the agent's stance (step S206/Yes), the control unit 20 performs control such that the utterance generation unit 207 generates a response utterance for showing empathy with the positive evaluation/negative evaluation, and the output control unit 209 causes the agent device 1 to output by sound, the response utterance (step S221). Note that the control unit 20 may further perform an utterance for inquiry about a reason.

### <<4 • Supplement >>

The information processing system according to the present embodiment has been described in detail above. The following will supplement the above embodiment.

The inquiry utterance of the sound agent is not limited to the case where the agent device 1 outputs by sound, and for example, the response sentence of the agent may be displayed or projected.

Furthermore, the inquiry may be performed before the user views the content. For example, in a case where the user is trying to view a suspense drama (recognition of the user state), the server 2 outputs from the agent device 1 an inquiry utterance "Do you like suspense?".

Furthermore, an inquiry may be perform to the user in combination with other information such as news (for example, "What do you think is the topic of the drama ○○ recently?", or the like).

Furthermore, the server 2 can accumulate the user's positive/negative reactions (including the user's state such as gestures, facial expressions, or movement of line sight, in addition to the utterance content), and predict the positive/negative evaluation in a case where there is no explicit response from the user. In this case, the server 2 may perform an utterance for inquiry the user whether the predicted evaluation is correct (for example, "It seems like you do not like this song very much" or the like) to acquire more decided preference information.

Furthermore, since the positive/negative reaction has individual differences (a person with high response and a person with low response are assumed), the server 2 extracts the evaluation in consideration of the characteristics of the individual.

Furthermore, the server 2 makes the degree of decision low (decreases the weight) for the evaluation of the user in a case of being in tune with the evaluation of another user. This is because, in a case where a plurality of users has a dialogue, there is a possibility that the user may have a different opinion but synchronizes with others. Furthermore, the method and content of the inquiry may be changed depending on whether the user is alone or with a plurality of users.

Furthermore, in a case where it is likely that preference information can be acquired according to the user's situation, the inquiry is further continued, and the inquiry is reduced in the situation where the user is tired. Furthermore, the user's situation (tired, busy, relaxed, spare time, or the like) is determined from biological information, utterance (utterance content, utterance tempo, voice volume, or the like), time zone, day of the week, or the like.

Furthermore, after the user's preference information is acquired and the purpose is achieved, the dialogue may be continued. For example, it may be an utterance that just shows empathy and urges the next utterance (for example, "It's great, anything else?", or the like).

Furthermore, the server 2 may control the timing for inquiry depending on the content. For example, in a case where the content is a broadcast program, an inquiry may be performed during a commercial, or in a case where the content is music, the inquiry for the content may be performed when the music changes.

Furthermore, a plurality of agents (character, personality) may be set in one agent device 1. A stance may be set for each agent, and agents matching the user evaluation may be made to appear.

### << 5. Conclusion >>

As described above, in the information processing system according to the present embodiment of the present disclosure, preference information of a user can be acquired through more natural conversation according to an utterance content of a user.

Furthermore, further preference information can be acquired by participating in the dialogue of a plurality of users and enhancing the conversation with natural conversations such as showing empathy with the user evaluation, urging the dialogue of a related content, or urging the utterance of the user who has not perform evaluation.

Furthermore, in the present embodiment, the timing of inquiry is controlled in consideration of an interval of an utterance and excitement, so that the agent can naturally participate in the conversation without disturbing the user's conversation and continue the conversation. Unlike conventional unilateral information presentation, a comfortable (stress-free) conversation (interaction) between the user and the sound agent can be realized.

While preferred embodiment of the present disclosure has been described in detail with reference to the accompanying drawings, the present technology is not limited to such examples. It is obvious that various variations and modifications can be conceived within the scope of the technical idea described in the claims by a person having ordinary knowledge in the field of technology to which the present disclosure belongs, and, of course, it is understood that these variations and modifications belong to the technical scope of present disclosure.

For example, a computer program for causing the hardware such as the CPU, ROM, or RAM built in the agent device 1 or the server 2 described above to exhibit the function of the agent device 1 or the server 2 can also be created. Furthermore, a computer readable storage medium storing the computer program is also provided.

Furthermore, the effects described in this specification are merely illustrative or exemplary, and are not limitative. That is, the technology according to the present disclosure can exhibit other effects obvious to those skilled in the art from the description of this specification together with the effects described above or instead of the effects described above.

Note that, the present technology can adopt the following configuration.
(1) An information processing apparatus including:
   an evaluation extraction unit that extracts an evaluation by a user for content on the basis of an utterance content of the user related to the content; and
   a generation unit that generates inquiry sound data for further acquiring preference information of the user for the content on the basis of the extracted evaluation.
(2) The information processing apparatus according to (1) described above, in which the evaluation extraction unit extracts, from a dialogue content of a plurality of users, the evaluation of each of the user for the content.
(3) The information processing apparatus according to (1) or (2) described above, in which the generation unit generates, as the preference information, inquiry sound data asking a reason for the evaluation of the user.
(4) The information processing apparatus according to any one of (1) to (3) described above, in which the generation unit generates inquiry sound data including an utterance that empathizes with the evaluation of the user for the content.
(5) The information processing apparatus according to any one of (1) to (4) described above, in which the evaluation extraction unit acquires an evaluation word related to the content to be evaluated from an analysis result of the utterance content, and extracts the evaluation.
(6) The information processing apparatus according to any one of (1) to (5) described above, in which the evaluation extraction unit further extracts the evaluation of the user for the content on the basis of at least one of expression, emotion, sight line, or gesture of the user.
(7) The information processing apparatus according to any one of (1) to (6) described above, in which the generation unit generates inquiry sound data for inquiry about the reason for the evaluation as the preference information after emphasizing with either positive evaluation or negative evaluation in a case where evaluations of a plurality of users do not match with each other.
(8) The information processing apparatus according to any one of (1) to (7) described above, in which the generation unit generates inquiry sound data for inquiry to a user who has not uttered an evaluation for the content among the plurality of users, about the evaluation for the content.
(9) The information processing apparatus according to any one of (1) to (7), in which
   the information processing apparatus further includes an output control unit that performs control such that the generated inquiry data is output by sound.
(10) The information processing apparatus according to (9) described above, in which the output control unit determines a situation of the dialogue of a plurality of users, and performs control such that the inquiry sound data is output by sound at a predetermined timing.
(11) The information processing apparatus according to any one of (1) to (10) described above, in which the evaluation extraction unit extracts the evaluation of another user who has dialogue with the user depending on whether or not the another user agrees with the evaluation of the user in a case where the set preference information is different from the evaluation of the user.
(12) The information processing apparatus according to any one of (1) to (11) described above, in which the generation unit emphasizes with the evaluation in a case where set preference information of an agent is similar to the evaluation of the user, and generates inquiry sound data for inquiry about the reason for the evaluation.
(13) The information processing apparatus according to any one of (1) to (12) described above, in which the generation unit generates inquiry sound data for inquiry about unregistered preference information related to the content in the stored preference information of the user.
(14) The information processing apparatus according to any one of (1) to (13) described above, in which the generation unit determines whether or not generation of the inquiry sound data is continued according to a reaction of the user to an inquiry.
(15) An information processing method including:
   by a processor,
   extracting an evaluation by a user for content on the basis of an utterance content of the user related to the content; and
   generating inquiry sound data for further acquiring preference information of the user for the content on the basis of the extracted evaluation.
(16) A program for causing a computer to function as:
   an evaluation extraction unit that extracts an evaluation by a user for content on the basis of an utterance content of the user related to the content; and
   a generation unit that generates inquiry sound data for further acquiring preference information of the user for the content on the basis of the extracted evaluation.

### REFERENCE SIGNS LIST

- 1: Agent device
- 2: Server
- 3: Display device
- 4: Content DB
- 5: Network
- 10: Control unit
- 11: Communication unit
- 12: Sound input unit
- 13: Camera
- 14: Biological sensor
- 15: Sound output unit
- 16: Projector
- 17: Storage unit
- 20: Control unit
- 21: Communication unit
- 22: User information DB
- 23: Evaluation word DB
- 24: Inquiry utterance sentence DB
- 25: Agent stance DB
- 201: Sound recognition unit
- 202: User state recognition unit
- 203: Utterance analysis unit
- 204: Content detection unit
- 205: Evaluation extraction unit
- 206: Content preference management unit
- 207: Utterance generation unit
- 208: Stance setting unit
- 209: Output control unit

## Claims

1. An information processing apparatus comprising:
an evaluation extraction unit that extracts an evaluation by a user for content on a basis of an utterance content of the user related to the content; and
a generation unit that generates inquiry sound data for further acquiring preference information of the user for the content on a basis of the extracted evaluation.

2. The information processing apparatus according to claim 1, wherein the evaluation extraction unit extracts, from a dialogue content of a plurality of users, the evaluation of each of the user for the content.

3. The information processing apparatus according to claim 1, wherein the generation unit generates, as the preference information, inquiry sound data asking a reason for the evaluation of the user.

4. The information processing apparatus according to claim 1, wherein the generation unit generates inquiry sound data including an utterance that empathizes with the evaluation of the user for the content.

5. The information processing apparatus according to claim 1, wherein the evaluation extraction unit acquires an evaluation word related to the content to be evaluated from an analysis result of the utterance content, and extracts the evaluation.

6. The information processing apparatus according to claim 1, wherein the evaluation extraction unit further extracts the evaluation of the user for the content on a basis of at least one of expression, emotion, sight line, or gesture of the user.

7. The information processing apparatus according to claim 1, wherein the generation unit generates inquiry sound data for inquiry about the reason for the evaluation as the preference information after emphasizing with either positive evaluation or negative evaluation in a case where evaluations of a plurality of users for the content do not match with each other.

8. The information processing apparatus according to claim 1, wherein the generation unit generates inquiry sound data for inquiry to a user who has not uttered an evaluation for the content among the plurality of users, about the evaluation for the content.

9. The information processing apparatus according to claim 1, wherein
the information processing apparatus
further comprises an output control unit that performs control such that the generated inquiry data is output by sound.

10. The information processing apparatus according to claim 9, wherein the output control unit determines a situation of the dialogue of a plurality of users, and performs control such that the inquiry sound data is output by sound at a predetermined timing.

11. The information processing apparatus according to claim 1, wherein the evaluation extraction unit extracts the evaluation of another user who has dialogue with the user depending on whether or not the another user agrees with the evaluation of the user.

12. The information processing apparatus according to claim 1, wherein the generation unit emphasizes with the evaluation in a case where set preference information of an agent is similar to the evaluation of the user, and generates inquiry sound data for inquiry about the reason for the evaluation in a case where the set preference information is different from the evaluation of the user.

13. The information processing apparatus according to claim 1, wherein the generation unit generates inquiry sound data for inquiry about unregistered preference information related to the content in the stored preference information of the user.

14. The information processing apparatus according to claim 1, wherein the generation unit determines whether or not generation of the inquiry sound data is continued according to a reaction of the user to an inquiry.

15. An information processing method comprising:
by a processor,
extracting an evaluation by a user for content on a basis of an utterance content of the user related to the content; and
generating inquiry sound data for further acquiring preference information of the user for the content on a basis of the extracted evaluation.

16. A program for causing a computer to function as:
an evaluation extraction unit that extracts an evaluation by a user for content on a basis of an utterance content of the user related to the content; and
a generation unit that generates inquiry sound data for further acquiring preference information of the user for the content on a basis of the extracted evaluation.
